# FASCICULE DE BREVET EUROPEEN

(11) **EP 0 992 415 B1**
(45) Date de publication et mention de la délivrance du brevet: **02.01.2004**
(21) Numéro de dépôt: 99402429.7
(22) Date de dépôt: 04.10.1999
(51) Int. Cl.: B61F 5/24, B61F 5/14, B60G 21/073

(54) **Dispositif d'amortissement des mouvements transversaux et de lacet d'un véhicule, et véhicule pourvu d'un tel dispositif**
Einrichtung zum Dämpfen der Querbewegung und des Schlingerns eines Fahrzeuges und mit einer solchen Vorrichtung ausgerüstetes Fahrzeug
Device for damping the transverse motions and the hunting of a vehicle and vehicle equipped with such a device

(30) Priorité: 07.10.1998 FR 9812574
(43) Date de publication de la demande: 12.04.2000
(73) Titulaire: Alstom Holdings, 75116 Paris (FR)
(72) Inventeur: Boichot, Philippe, 21000 Dijon (FR); Bondon, Fabienne, 71490 Couches (FR)
(74) Mandataire: Moncheny, Michel

(56) Documents cités:
- EP-A- 0 536 707
- EP-A- 0 615 890
- EP-A- 0 747 277
- FR-A- 2 157 161
- FR-A- 2 211 360

## Description

La présente invention concerne un dispositif d'amortissement des mouvements transversaux et de lacet d'un véhicule.

L'invention a trait à tout véhicule, notamment routier ou ferroviaire, pourvu d'une caisse reposant sur deux organes disposés longitudinalement à distance l'un de l'autre, et libres de se déplacer transversalement par rapport à cette caisse. Au sens de l'invention, les termes longitudinaux et transversaux doivent être appréciés par rapport au déplacement du véhicule.

Dans le domaine ferroviaire, un tel véhicule est par exemple constitué par une voiture, reposant sur deux bogies respectivement avant et arrière. Lors des déplacements de cette voiture, la caisse possède un certain débattement transversal par rapport aux bogies et se trouve de surcroît soumise à un mouvement angulaire dit de lacet. Ce dernier est dû au pivotement de l'ensemble de la caisse autour d'un axe vertical, qui est situé entre les bogies avant et arrière, sensiblement selon l'axe longitudinal médian du véhicule. Ces mouvements, que ce soit transversaux ou de lacet, sont source d'inconfort ou risquent d'engager la sécurité du matériel. Il est donc nécessaire de munir le véhicule d'un dispositif permettant d'amortir de tels mouvements.

On connaît, par FR-A-2 252 228, un dispositif d'amortissement des mouvements transversaux de la caisse par rapport aux bogies. Ce dispositif comprend deux vérins assujettis à l'un des bogies, chacun de ces vérins définissant deux chambres dont les volumes respectifs varient en fonction du mouvement relatif transversal entre le bogie et la caisse. Ces chambres sont reliées deux à deux au moyen de lignes hydrauliques sur lesquelles sont interposées des valves de réglage de l'écoulement fluidique.

Cette solution présente cependant un inconvénient, en ce sens qu'il est' nécessaire de monter deux dispositifs tels que décrits ci-dessus, respectivement sur les bogies avant et arrière du véhicule. Aucun couplage entre l'avant et l'arrière n'est exploité, ce qui ne permet pas d'optimiser l'amortissement en lacet de la caisse.

Afin de pallier les inconvénients de l'art antérieur évoqués ci-dessus, l'invention se propose de réaliser un dispositif assurant un amortissement fiable à la fois des mouvements transversaux et de lacet de la caisse, et permettant à un opérateur de régler ces deux composantes d'amortissement indépendamment l'une de l'autre.

A cet effet, l'invention a pour objet un dispositif d'amortissement destiné à être monté sur un véhicule, notamment ferroviaire, comprenant une caisse reposant sur des premier et second organes de support, notamment des bogies, disposés longitudinalement à distance l'un de l'autre, la caisse étant apte à se déplacer. par rapport aux organes de support selon deux types de mouvements, à savoir transversalement ou en pivotement autour d'un point situé sensiblement sur un axe longitudinal médian du véhicule et entre lesdits organes de support, caractérisé en ce que ledit dispositif comprend :
- des premier et second vérins symétriques, s'étendant respectivement entre chaque organe de support et la caisse, chaque vérin définissant des première et seconde chambres remplies d'un fluide hydraulique, propres à être respectivement comprimée et détendue lors de variations de la distance transversale entre la caisse et l'organe de support considéré,
- des première et seconde lignes hydrauliques mettant en communication fluidique d'une part les premières chambres des premier et second vérins, d'autre part les secondes chambres des premier et second vérins, lesdites première et seconde lignes comportant respectivement des premier et second points intermédiaires à partir desquels s'étendent des première et seconde lignes dérivées débouchant, à l'opposé des points intermédiaires, dans des premier et second accumulateurs contenant un gaz sous pression,
- des premier à quatrième moyens de contrôle de l'écoulement du fluide hydraulique, disposés entre chacune des chambres et un des points intermédiaires, propres à assurer un débit contrôlé de l'écoulement du fluide depuis lesdites chambres vers les points intermédiaires,
- des cinquième et sixième moyens de contrôle de l'écoulement du fluide hydraulique, disposés entre chacun des points intermédiaires et l'accumulateur correspondant, propres à assurer un débit contrôlé de l'écoulement du fluide depuis les points intermédiaires vers les accumulateurs,
- les chambres mises en communication mutuelle par chacune des deux lignes étant respectivement détendue et comprimée lors d'un premier type de mouvements entre les organes de support et la caisse, de sorte que sensiblement l'intégralité du fluide chassé de chaque chambre comprimée pénètre dans la chambre détendue avec lequelle elle communique, globalement sans variation du volume de fluide dans les accumulateurs, et
- les chambres mises en communication par l'une des lignes étant toutes deux comprimées lors d'un second type de mouvements entre les organes de support et la caisse, de manière à diriger le fluide chassé depuis ces deux chambres comprimées vers l'un des accumulateurs et à faire augmenter la pression du gaz qui y est contenu, alors que les chambres mises en communication par l'autre ligne sont toutes deux détendues, de manière à diriger vers ces deux chambres détendues une partie du fluide présent dans l'autre accumulateur, et à faire baisser la pression du gaz qui y est contenu.

Selon d'autres caractéristiques de l'invention :
- les premier à quatrième moyens de contrôle de l'écoulement du fluide sont propres à assurer un écoulement libre du fluide depuis les points intermédiaires vers lesdites chambres ;
- les cinquième et sixième moyens de contrôle de l'écoulement du fluide sont propres à assurer un écoulement libre du fluide depuis les accumulateurs vers les points intermédiaires ;
- les moyens de contrôle de l'écoulement du fluide comprennent un clapet anti-retour monté en parallèle avec une valve ;
- chacun des vérins comprend un logement solidaire de la caisse ou de l'un des organes de support, logement dans lequel est propre à se déplacer un piston dont la tige est solidaire de l'un des organes ou de la caisse, la tige s'étendant longitudinalement sur l'intégralité du logement ;
- un premier vérin s'étend à partir d'une première extrémité transversale de la caisse, alors que l'autre vérin s'étend à partir de l'extrémité transversale de la caisse, opposée à la première extrémité.

L'invention a également pour objet un véhicule, notamment ferroviaire, comprenant une caisse reposant sur deux organes de support, notamment deux bogies, disposés longitudinalement à distance l'un de l'autre, caractérisé en ce que ce véhicule est équipé d'un dispositif d'amortissement tel que décrit ci-dessus.

L'invention va être décrite ci-après, en référence aux dessins annexés donnés uniquement à titre d'exemple non limitatifs et dans lesquels :
- la figure 1 est une vue schématique de dessus d'un véhicule équipé d'un dispositif d'amortissement conforme à l'invention ;
- la figure 2 est une vue à plus grande échelle du véhicule de la figure 1, illustrant de manière détaillée le dispositif d'amortissement dans sa position de repos ;
- la figure 3 est une vue analogue à la figure 1, illustrant le dispositif de la figure 1 dans sa position d'amortissement des mouvements transversaux de la caisse du véhicule ; et
- la figure 4 est une vue analogue à la figure 1, illustrant le dispositif de la figure 1 dans sa position d'amortissement des mouvements de lacet de la caisse du véhicule.

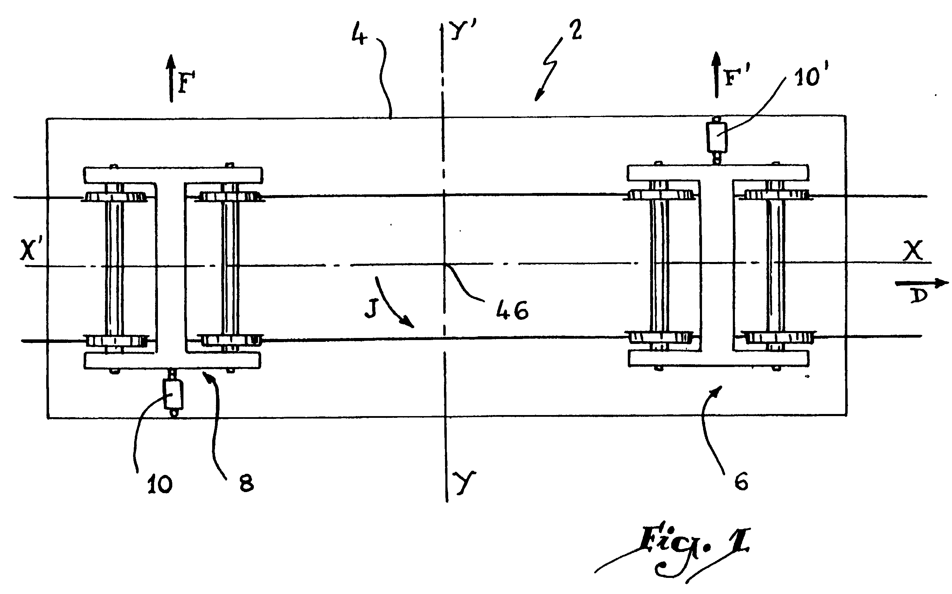

La figure 1 représente de manière schématique un véhicule pourvu d'un dispositif d'amortissement conforme à l'invention. Un tel véhicule, désigné dans son ensemble par la référence 2, est à titre d'exemple non limitatif une voiture. Il comprend une caisse 4 reposant sur des premier et second bogies 6 et 8. Cette voiture 2 est destinée à se déplacer selon la flèche D. L'axe longitudinal médian de cette caisse est désigné par X'X, alors que son axe transversal médian est appelé Y'Y.

Lors de ses déplacements, la caisse 4 peut être sujette à des mouvements transversaux par rapport aux bogies 6 et 8, matérialisés par les flèches F et F'. La caisse peut également pivoter par rapport aux bogies, autour d'un point 46, ou axe de lacet, disposé sensiblement à l'intersection des axes X'X et Y'Y, ce qui est matérialisé par la flèche J.

L'ensemble de ces mouvements est amorti par un dispositif d'amortissement conforme à l'invention, dont seuls deux vérins 10, 10' sont représentés sur cette figure 1.

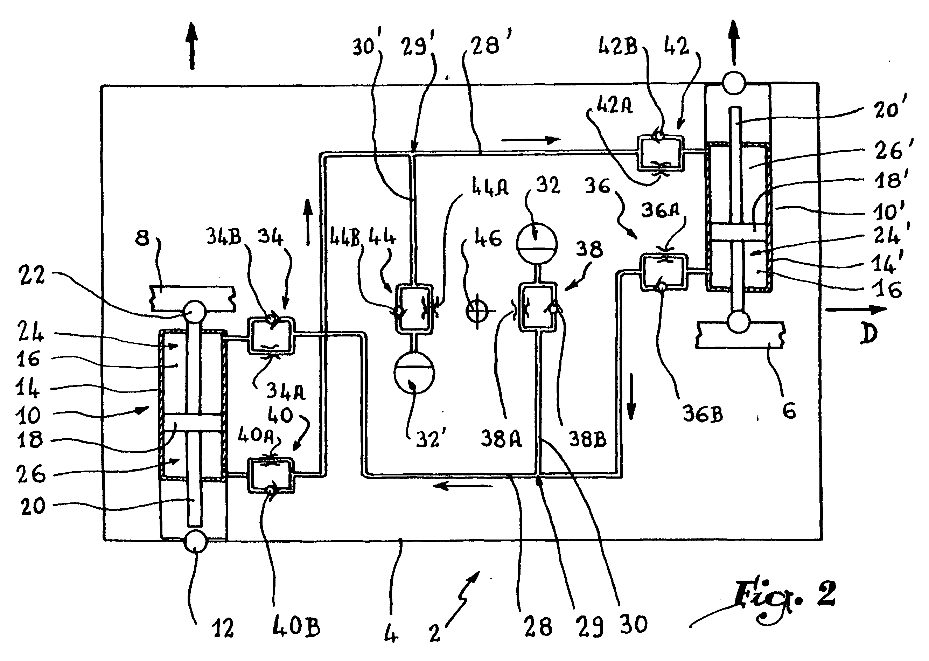

Ce dispositif d'amortissement est illustré de manière détaillée à la figure 2, sur laquelle une seule des extrémités transversales de chacun des bogies 6, 8 est schématisée.

Le dispositif d'amortissement conforme à l'invention comprend un premier vérin 10 dont le corps 11 est fixé, par une liaison rotule 12, au niveau d'une extrémité transversale de la caisse 4. Le corps 11 délimite un logement 14 sensiblement fermé et rempli d'un fluide 16, par exemple de l'huile hydraulique. Un piston 18 est disposé dans le logement 14, en étant libre de coulisser longitudinalement par rapport à celui-ci. Ce piston 18 est assujetti, par sa tige 20, au niveau de l'extrémité transversale du bogie arrière 8, voisine de l'extrémité de la caisse recevant le vérin 10. La liaison entre la tige 20 et le bogie 8 est assurée par une rotule supplémentaire 22.

Le piston 18 définit, à l'intérieur du logement 14, deux chambres dénommées respectivement proximale 24 et distale 26, en faisant référence au bogie arrière 8. Lors des débattements entre les extrémités transversales en regard de la caisse 4 et du bogie arrière 8, le piston 18 est donc libre de se déplacer longitudinalement à l'intérieur du logement 14, de manière à faire varier les volumes respectifs des chambres 24 et 26. Il est à noter que le vérin 10 est symétrique, en ce sens que la section de poussée du piston est identique dans les chambres 24 et 26, du fait que la tige 20 s'étend longitudinalement sur l'intégralité du logement 14 et en traverse les deux parois d'extrémité.

Le dispositif d'amortissement conforme à l'invention comprend également un second vérin 10' s'étendant entre la caisse 4 et le bogie avant 6. Ce vérin 10' est fixé sur l'extrémité transversale de la caisse, opposée à celle recevant le vérin 10.

Le vérin 10' possède une structure analogue à celle du vérin 10, et son corps 11', fixé à la caisse 4, définit un logement 14' recevant du fluide hydraulique 16, dans lequel peut coulisser un piston 18' fixé, par sa tige 20', sur le bogie avant 6. Le piston 18' délimite donc des chambres proximales 24' et distales 26', en faisant référence au bogie avant 6, dont les volumes respectifs sont à même de varier en fonction des mouvements du piston 18', c'est-à-dire lors de débattements transversaux entre la caisse 4 et le bogie avant 6.

Les vérins 10 et 10' sont assujettis à la caisse 4 au niveau des extrémités transversales opposées de cette dernière.

Les deux chambres proximales 24, 24' des deux vérins 10, 10' sont en communication fluidique mutuelle par l'intermédiaire d'une ligne 28, à partir d'un point intermédiaire 29 de laquelle s'étend une ligne secondaire 30 débouchant dans un accumulateur oléopneumatique 32. Ce dernier est formé par un logement renfermant un gaz inerte sous pression et susceptible de recevoir le fluide hydraulique par la ligne 30. La pression du gaz à l'intérieur de l'accumulateur est fonction de la quantité de fluide présent dans ce dernier. De manière connue, le gaz inerte et le fluide sont généralement séparés physiquement par une membrane ou une vessie.

Des moyens de contrôle de l'écoulement du fluide sont interposés entre la chambre 24 du vérin 10 et le point intermédiaire 29. Ces moyens de contrôle, désignés dans leur ensemble par la référence 34, comprennent une valve 34A montée en parallèle avec un clapet anti-retour 34B. Il est à noter que la disposition du clapet est telle qu'il permet un écoulement libre du fluide depuis le point intermédiaire 29 vers la chambre 24 et un écoulement contrôlé par réglage de la valve 34A, dans le sens inverse.

Des moyens 36 de contrôle de l'écoulement du fluide sont également prévus entre la chambre 24' et le point intermédiaire 29. Ces moyens comprennent une valve 36A montée en parallèle avec un clapet anti-retour 36B, qui permet un écoulement libre du fluide depuis le point 29 jusqu'à la chambre 24' et un écoulement contrôlé dans le sens inverse, par réglage de la valve 36A.

Il est également prévu des moyens 38 permettant le contrôle de l'écoulement du fluide entre le point intermédiaire 29 et l'accumulateur 32. A cet effet, une valve 38A est montée en parallèle avec un clapet anti-retour 38B, permettant le libre écoulement du fluide depuis l'accumulateur 32 vers le point intermédiaire 29, et un écoulement contrôlé dans le sens inverse, par réglage de la valve 38A.

Les chambres distales 26 et 26' sont mises en communication fluidique par l'intermédiaire d'une ligne 28', à partir d'un point intermédiaire 29' de laquelle s'étend une ligne secondaire 30', qui débouche dans un accumulateur 32' analogue à l'accumulateur 32.

Des moyens 40 permettent le contrôle de l'écoulement du fluide entre la chambre 26 et le point intermédiaire 29'. Ces moyens comprennent une valve 40A montée en parallèle avec un clapet anti-retour 40B permettant l'écoulement libre du fluide depuis le point intermédiaire 29' vers la chambre 26 et assurant un écoulement contrôlé par réglage de la valve 40A dans l'autre sens.

Des moyens 42 destinés au contrôle de l'écoulement du fluide sont également interposés entre la chambre 26' et le point intermédiaire 29'. Il s'agit d'une valve 42A montée en parallèle avec un clapet anti-retour 42B permettant l'écoulement libre du fluide depuis le point intermédiaire 29' vers la chambre 26' et contrôlant l'écoulement de ce fluide dans l'autre sens, par réglage de la valve 42A.

Enfin, l'écoulement du fluide contre le point intermédiaire 29' et l'accumulateur 32' est contrôlé par l'intermédiaire de moyens 44, qui comprennent une valve 44A montée en parallèle avec un clapet anti-retour 44B. Ce dernier autorise une circulation libre du fluide depuis l'accumulateur 32' vers le point intermédiaire 29' et contrôle le débit de ce fluide dans l'autre sens, en fonction du réglage de la valve 44A.

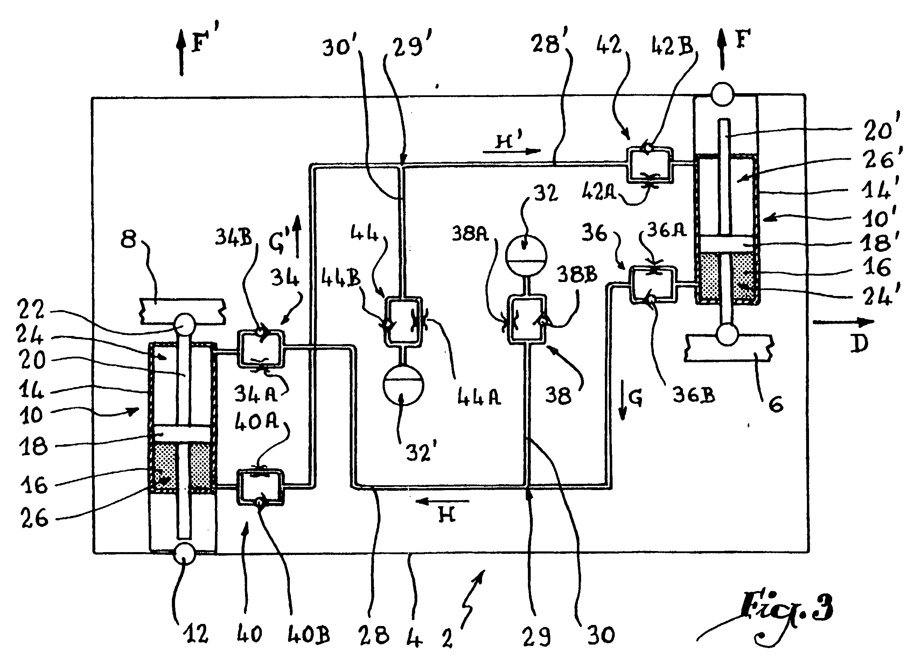

On va maintenant décrire, en faisant référence à la figure 3, le fonctionnement du dispositif d'amortissement conforme à l'invention lors de mouvements transversaux de la caisse 4 par rapport aux bogies 6 et 8.

Lors d'un tel mouvement transversal, la caisse 4 se déplace par rapport aux bogies avant 6 et arrière 8, selon des flèches F et F' dirigées selon le même sens. Le piston 18 a donc tendance à se rapprocher de l'extrémité longitudinale du logement 14, la plus proche de la rotule 12, de sorte que la chambre 26 est comprimée alors que la chambre 24 est détendue. On entend par chambre comprimée ou détendue, une chambre à l'intérieur de laquelle le fluide hydraulique est comprimé ou détendu. L'état comprimé est indiqué en gras sur les dessins.

De manière analogue, le piston 18' se rapproche de l'extrémité longitudinale du logement 14', voisine du bogie avant 6, de sorte que la chambre 24' est comprimée alors que la chambre 26' est détendue.

Cette compression des chambres 24' et 26 contribue à chasser l'huile présente dans ces chambres vers les lignes 28 et 28', selon les flèches respectives G et G'. La présence des moyens de contrôle de l'écoulement du fluide 36 et 40 permet de régler, grâce aux valves 36A et 40A, la différence de pression existant entre d'une part la chambre 24' et le point intermédiaire 29, et d'autre part entre la chambre 26 et le point intermédiaire 29'. Ceci permet de moduler l'effort de rappel exercé sur les pistons 18 et 18' lors de leurs déplacements dûs au mouvement transversal de la caisse par rapport aux bogies.

Etant donné que l'on se place dans le cas d'un strict mouvement transversal de la caisse par rapport au bogie, le déplacement longitudinal des deux pistons 18 et 18' est identique, de sorte que la chambre 24' subit une diminution de volume égale à l'augmentation de volume correspondante dans la chambre 24. De même, la chambre 26 est soumise à une diminution de volume correspondant à l'augmentation de volume au sein de la chambre 26'.

De la sorte, l'intégralité du fluide hydraulique chassé depuis les chambres comprimées respectivement 24' et 26 est admis au sein des chambres détendues respectivement 24 et 26'. Ces mouvements fluidiques sont représentés par les flèches H et H'.

Il est à noter que, du fait de la configuration des clapets anti-retour 34B et 42B, l'écoulement du fluide vers les chambres détendues 24 et 26' s'effectue de manière libre. Ceci permet un gavage de ces dernières et évite ainsi la cavitation du fluide hydraulique lors de son admission dans ces chambres.

Etant donné que l'intégralité du fluide évacué depuis les chambres comprimées 24' et 26 est admis au sein des chambres détendues 24 et 26', les lignes secondaires 30 et 30', ainsi que les accumulateurs 32 et 32' ne jouent globalement aucun rôle.

L'intensité de l'amortissement conféré par le dispositif de l'invention lors de mouvements transversaux de la caisse, peut être modifiée par réglage des valves 36A et 40A disposées immédiatement en aval des chambres comprimées 24' et 26. Les pressions dans les accumulateurs 32 et 32' étant inchangées, et les vérins étant symétriques, aucun effort transversal de rappel n'est transmis à la caisse. Seul l'effort d'amortissement transversal, induit par le passage du fluide dans les valves 36A et 40A, est transmis à la caisse. Le système se comporte donc comme un dispositif d'amortissement transversal.

Bien entendu, des phénomènes analogues se produisent lors d'un déplacement transversal en sens inverse (vers le bas sur la figure 2) de la caisse 4.

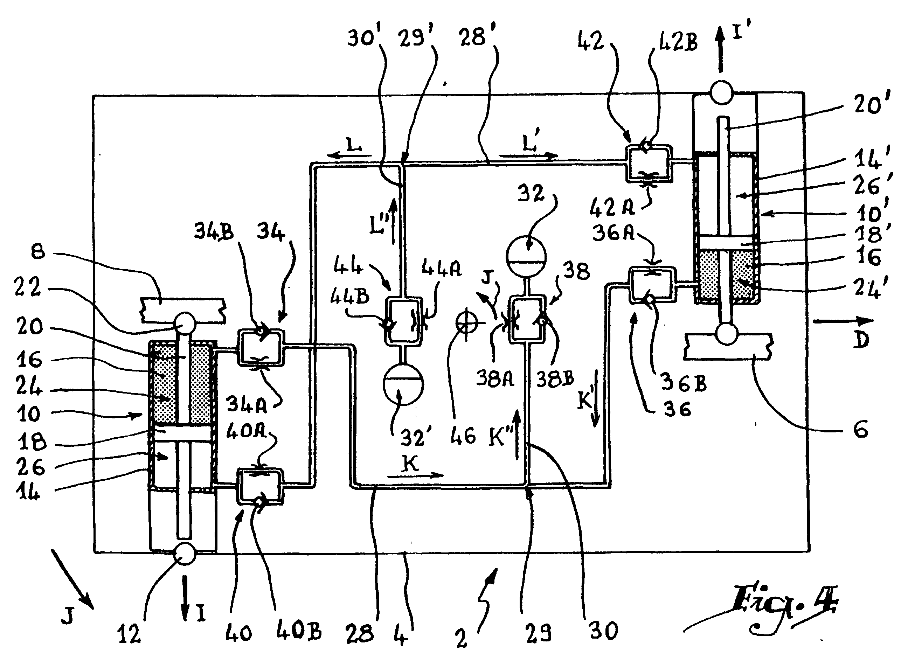

La figure 4 représente le fonctionnement du dispositif conforme à l'invention, lors des mouvements de lacet de la caisse 4. De tels mouvements induisent un pivotement global de la caisse 4 autour du point 46, ou axe de lacet. Ce pivotement, matérialisé par la flèche J sur cette figure 3, est provoqué par un déplacement de la caisse 4 à la fois par rapport au bogie arrière 8 selon la flèche I, ainsi que par rapport au bogie avant 6 selon la flèche I'. Ces déplacements s'effectuent donc selon des sens opposés.

Ces mouvements de lacet entraînent une compression des chambres 24 et 24' des vérins 10 et 10'. Ceci a pour effet de chasser une partie du fluide initialement présent dans ces chambres vers la ligne 28, en direction du point intermédiaire 29. Ce fluide provenant des chambres 24 et 24' est alors acheminé, par la ligne secondaire 30, en direction de l'accumulateur 32. L'écoulement du fluide depuis ces chambres comprimées 24, 24' vers l'accumulateur 32 est régulé par les valves 34A, 36A, 38A, associées respectivement aux clapets anti-retour 34B, 36B et 38B. Cet afflux de fluide au sein de l'accumulateur 32 tend à réduire le volume occupé par le gaz inerte et donc à augmenter la pression s'exerçant sur celui-ci.

Le mouvement du fluide hydraulique depuis les chambres comprimées 24, 24' jusqu'à l'accumulateur 32 est matérialisé par les flèches K, K' et K".

Simultanément à la compression des chambres 24 et 24' se produit une détente au sein des chambres 26 et 26' . Etant donné que le volume de ces chambres 26 et 26' augmente lors de ces mouvements de lacet de la caisse, du fluide hydraulique est dirigé depuis l'accumulateur 32' en direction de ces chambres détendues. Cet écoulement est autorisé librement du fait de la disposition des clapets anti-retour 40A, 42A et 44A. Ceci permet d'éviter la cavitation au sein du fluide lors de son admission dans ces chambres 26 et 26'.

Etant donné que le volume de fluide dans l'accumulateur 32' subit une diminution par rapport à la position de repos représentée à la figure 2, le volume de gaz inerte est soumis à une augmentation correspondante, ce qui contribue à diminuer la pression régnant au sein de ce gaz.

Le mouvement du fluide hydraulique depuis l'accumulateur 32' vers les chambres détendues 26, 26' est matérialisé par les flèches L, L' et L".

Les variations de pression interne subies par le gaz inerte présent respectivement dans les accumulateurs 32 et 32' contribuent à générer un couple de rappel s'exerçant à l'encontre du mouvement angulaire de lacet.

En effet, aux pertes de charge près induites par les valves et clapets, la pression dans la chambre 24 est sensiblement la pression réduite de l'accumulateur 32', la pression dans la chambre 26 est sensiblement la pression accrue de l'accumulateur 32. La différence de pressions entre les chambres 24 et 26 induit, via la section du piston 18, un effort transversal du vérin sur la caisse, appliqué en 12 et opposé au déplacement I.

Par raison de symétrie du dispositif, un effort transversal de même intensité, mais opposé au déplacement I', est appliqué en 12' sur la caisse.

Ces deux efforts transversaux étant opposés, la résultante sur la caisse est nulle, par contre un couple de rappel s'opposant au mouvement angulaire de lacet J est exercé. Le dispositif assure donc une fonction raideur angulaire anti-lacet.

Les pertes de charge induites par les valves de réglage 34A et 38A, ainsi que les valves 42A et 44A, génèrent pour les mêmes raisons un couple d'amortissement sur la caisse.

L'amortissement en lacet peut être modulé par action sur les valves 38A et 44A. Il est donc à noter que cette composante d'amortissement peut être régulée indépendamment de celle visant à amortir les mouvements transversaux de la caisse.

L'invention permet de réaliser les objectifs précédemment mentionnés. En effet, le dispositif conforme à l'invention assure un amortissement fiable à l'égard des mouvements à la fois transversaux et de lacet de la caisse par rapport aux bogies. De plus, grâce à l'invention, ce double amortissement est réalisé par l'intermédiaire d'un unique dispositif, ce qui est à comparer avec l'art antérieur, dans lequel il est nécessaire de prévoir un dispositif pour chaque bogie, afin d'assurer uniquement un amortissement des mouvements transversaux.

Les deux types d'amortissement conférés par le dispositif de l'invention sont réglables quant à leur intensité, du fait de la présence des différentes valves associées aux clapets anti-retour correspondants. De plus, ces deux composantes d'amortissement peuvent être réglables indépendamment l'une de l'autre, par action sur les valves correspondantes.

Du fait de la configuration des clapets anti-retour interposés entre les accumulateurs et les chambres, la cavitation au sein du fluide hydraulique admis dans ces chambres est évitée dans une large mesure.

De plus, le dispositif conforme à l'invention peut être piloté. En effet, si les valves qu'il met en oeuvre peuvent être des composants passifs, tels que des soupapes présentant une ouverture progressive en fonction de la pression différentielle, elles peuvent également être pilotées extérieurement pour contrôler la section des passages de manière active.

## Revendications

1. Dispositif d'amortissement destiné à être monté sur un véhicule (12), notamment ferroviaire, comprenant une caisse (4) reposant sur des premier (6) et second (8) organes de support, notamment des bogies, disposés longitudinalement à distance l'un de l'autre, la caisse étant apte à se déplacer par rapport aux organes de support (6, 8) selon deux types de mouvements, à savoir transversalement ou en.pivotement autour d'un point (46) situé sensiblement sur. un .axe longitudinal médian du véhicule (2) et entre lesdits organes de support, **caractérisé en ce que** ledit dispositif comprend :
- des premier (10) et second (10') vérins symétriques, s'étendant respectivement entre chaque organe de support (8,6) et la caisse (4), chaque vérin (10,10') définissant des première (24,24') et seconde (26,26') chambres remplies d'un fluide hydraulique (16,16'), propres à être respectivement comprimée et détendue lors de variations de la distance transversale entre la caisse (4) et l'organe de support considéré (6,8),
- des première (28) et seconde (28') lignes hydrauliques mettant en communication fluidique d'une part les premières chambres (24,24') des premier (10) et second (10') vérins, d'autre part les secondes chambres (26,26') des premier (10) et second (10') vérins, lesdites première (28) et seconde (28') lignes comportant respectivement des premier (29) et second (29') points intermédiaires à partir desquels s'étendent des première (30) et seconde (30') lignes dérivées débouchant, à l'opposé des points intermédiaires, dans des premier (32) et second (32') accumulateurs contenant un gaz sous pression,
- des premier à quatrième moyens (34,36,40,42) de contrôle de l'écoulement du fluide hydraulique, disposés entre chacune des chambres (24,24',26,26') et un des points intermédiaires (29,29'), propres à assurer un débit contrôlé de l'écoulement du fluide depuis lesdites chambres vers les points intermédiaires,
- des cinquième et sixième moyens (38,44) de contrôle de l'écoulement du fluide hydraulique, disposés entre chacun des points intermédiaires (29,29') et l'accumulateur correspondant (32,32'), propres à assurer un débit contrôlé de l'écoulement du fluide depuis les points intermédiaires vers les accumulateurs,
- les chambres (24,24',26,26') mises en communication mutuelle par chacune des deux lignes (28,28') étant respectivement détendue et comprimée lors d'un premier type de mouvements entre les organes de support (6,8) et la caisse (4), de sorte que sensiblement l'intégralité du fluide chassé de chaque chambre comprimée (24',26) pénètre dans la chambre détendue (24,26') avec lequelle elle communique, globalement sans variation du volume de fluide dans les accumulateurs (32,32'), et
- les chambres (24,24') mises en communication par l'une (28) des lignes étant toutes deux comprimées lors d'un second type de mouvements entre les organes de support (6,8) et la caisse (4), de manière à diriger le fluide chassé depuis ces deux chambres comprimées (24,24') vers l'un des accumulateurs (32) et à faire augmenter la pression du gaz qui y est contenu, alors que les chambres (26,26') mises en communication par l'autre ligne (28') sont toutes deux détendues, de manière à diriger vers ces deux chambres détendues (26,26') une partie du fluide présent dans l'autre accumulateur (32'), et à faire baisser la pression du gaz qui y est contenu.

2. Dispositif d'amortissement selon la revendication 1, **caractérisé en ce que** les premier à quatrième moyens (34,36, 40,42) de contrôle de l'écoulement du fluide sont propres à assurer un écoulement libre du fluide depuis les points intermédiaires (29,29') vers lesdites chambres (24,24',26, 26').

3. Dispositif d'amortissement selon la revendication 1 ou 2, **caractérisé en ce que** les cinquième et sixième moyens (38,44) de contrôle de l'écoulement du fluide sont propres à assurer un écoulement libre du fluide depuis les accumulateurs (32,32') vers les points intermédiaires (29,29').

4. Dispositif d'amortissement selon l'une des revendications 2 et 3, **caractérisé en ce que** lesdits moyens (34,36,38,40,42,44) de contrôle de l'écoulement du fluide comprennent un clapet anti-retour (34B,36B,38B,40B,42B,44B) monté en parallèle avec une valve (34A,36A,38A,40A,42A,44A).

5. Dispositif d'amortissement selon l'une des revendications 1 à 4, **caractérisé en ce que** chacun desdits vérins (10,10') comprend un logement (14,14') solidaire de la caisse (4) ou de l'un des organes de support (6,8), logement dans lequel est propre à se déplacer un piston (18,18') dont la tige (20,20') est solidaire de l'un des organes ou de la caisse, ladite tige s'étendant longitudinalement sur l'intégralité du logement.

6. Dispositif d'amortissement selon l'une des revendications 1 à 5, **caractérisé en ce qu'**un premier vérin (10) s'étend à partir d'une première extrémité transversale de la caisse (4), alors que l'autre vérin (10') s'étend à partir de l'extrémité transversale de la caisse (4), opposée à ladite première extrémité.

7. Véhicule, notamment ferroviaire, comprenant une caisse reposant sur deux organes de support (6,8), notamment deux bogies, disposés longitudinalement à distance l'un de l'autre, **caractérisé en ce qu'**il est équipé d'un dispositif d'amortissement selon l'une quelconque des revendications précédentes.

## Patentansprüche

1. Dämpfungsvorrichtung, die dafür bestimmt ist, auf einem Fahrzeug (12), insbesondere einem Eisenbahnfahrzeug, angebracht zu sein, mit einem Gehäuse (4), das auf einem ersten (6) und einem zweiten (8) Tragorgan, insbesondere Drehgestellen, ruht, welche in Längsrichtung mit Abstand voneinander angeordnet sind, wobei das Gehäuse dazu in der Lage ist, sich bezüglich der Tragorgane (6, 8) gemäß zwei Bewegungsarten zu verschieben, nämlich in Querrichtung oder in einer Schwenkbewegung um einen Punkt (46) herum, der praktisch auf einer mittleren Längsachse des Fahrzeugs (2) und zwischen den Tragorganen angeordnet ist, **dadurch gekennzeichnet, dass** die Vorrichtung umfasst:
- erste (10) und zweite (10') symmetrische Zylinder, die sich jeweils zwischen dem jeweiligen Tragorgan (8, 6) und dem Gehäuse (4) erstrecken, wobei jeder Zylinder (10, 10') eine erste (24, 24') und eine zweite (26, 26') Kammer definiert, die mit einer Hydraulikflüssigkeit (16, 16') gefüllt sind, und die dazu geeignet sind, während der Schwankungen in dem Querabstand zwischen dem Gehäuse (4) und dem betreffenden Tragorgan (6, 8) jeweils zusammengedrückt und gelockert zu werden,
- erste (28) und zweite (28') Hydraulikleitungen, welche einerseits eine Fließverbindung zwischen den ersten Kammern des ersten (10) und zweiten (10') Zylinders und andererseits zwischen den zweiten Kammern (26, 26') des ersten (10) und zweiten (10') Zylinders herstellen, wobei die erste (28) und zweite (28') Leitung jeweils einen ersten (29) und einen zweiten (29') Zwischenpunkt umfassen, von welchen aus sich eine erste (30) und eine zweite (30') Abzweigungsleitung erstrecken, welche gegenüber den Zwischenpunkten in einen ersten (32) und zweiten (32') Akkumulator münden, die ein unter Druck stehendes Gas enthalten,
- erste bis vierte Vorrichtungen (34, 36, 40, 42) zur Steuerung des Abfließens der Hydraulikflüssigkeit, welche zwischen der jeweiligen Kammer (24, 24', 26, 26') und einem der Zwischenpunkte (29, 29') angeordnet und dazu in der Lage sind, einen gesteuerten Durchsatz des Abfließens der Flüssigkeit aus den Kammern zu den Zwischenpunkten hin sicherzustellen,
- fünfte und sechste Vorrichtungen (38, 44) zur Steuerung des Abfließens der Hydraulikflüssigkeit, welche zwischen dem jeweiligen Zwischenpunkt (29, 29') und dem entsprechenden Akkumulator (32, 32') angeordnet und dazu in der Lage sind, einen gesteuerten Durchsatz des Abfließens der Flüssigkeit von den Zwischenpunkten zu den Akkumulatoren hin sicherzustellen,
- wobei die über die jeweilige der beiden Leitungen (28, 28') miteinander verbundenen Kammern (24, 24', 26, 26') während einer ersten Bewegungsart zwischen den Tragorganen (6, 8) und dem Gehäuse (4) jeweils gelockert und zusammengedrückt werden, so dass praktisch die gesamte, aus der jeweiligen zusammengedrückten Kammer (24', 26) verdrängte Flüssigkeit in die gelockerte Kammer (24, 26'), mit welcher sie in Verbindung steht, eindringt, und zwar im ganzen ohne Veränderung des Flüssigkeitsvolumens in den Akkumulatoren (32, 32'), und
- wobei die über die eine (28) der Leitung miteinander verbundenen Kammern (24, 24') während einer zweiten Bewegungsart zwischen den Tragorganen (6, 8) und dem Gehäuse (4) beide derart zusammengedrückt werden, dass die aus diesen beiden zusammengedrückten Kammern (24, 24') verdrängte Flüssigkeit zu dem einen der Akkumulatoren (32) hin geleitet und der Druck des in ihm enthaltenen Gases erhöht wird, während die über die andere Leitung (28') miteinander verbundenen Kammern (26, 26') beide gelockert werden, so dass ein Teil der in dem anderen Akkumulator (32') vorhandenen Flüssigkeit zu diesen beiden gelockerten Kammern (26, 26') hin geleitet und der Druck des in ihm enthaltenen Gases gesenkt wird.

2. Dämpfungsvorrichtung gemäß Anspruch 1, **dadurch gekennzeichnet, dass** die ersten bis vierten Vorrichtungen (34, 36, 40, 42) zur Steuerung des Abfließens der Flüssigkeit dazu in der Lage sind, ein freies Abfließen der Flüssigkeit von den Zwischenpunkten (29, 29') zu den Kammern (24, 24', 26, 26') hin sicherzustellen.

3. Dämpfungsvorrichtung gemäß Anspruch 1 oder 2, **dadurch gekennzeichnet, dass** die fünften und sechsten Vorrichtungen (38, 44) zur Steuerung des Abfließens der Flüssigkeit dazu in der Lage sind, ein freies Abfließen der Flüssigkeit von den Akkumulatoren (32, 32') zu den Zwischenpunkten (29, 29') hin sicherzustellen.

4. Dämpfungsvorrichtung gemäß einem der Ansprüche 2 und 3, **dadurch gekennzeichnet, dass** die Vorrichtungen (34, 36, 38, 40, 42, 44) zur Steuerung des Abfließens der Flüssigkeit ein Rückschlagventil (34B, 36B, 38B, 40B, 42B, 44B) aufweisen, das parallel zu einem Ventil (34A, 36A, 38A, 40A, 42A, 44A) angeordnet ist.

5. Dämpfungsvorrichtung gemäß einem der Ansprüche 1 bis 4, **dadurch gekennzeichnet, dass** jeder der Zylinder (10, 10') eine einstückig mit dem Gehäuse (4) oder mit einem der Tragorgane (6, 8) ausgebildete Aufnahme (14, 14') aufweist, wobei sich in der Aufnahme ein Kolben (18, 18') bewegen kann, dessen Stange (20, 20') einstückig mit dem einen der Organe oder mit dem Gehäuse ausgebildet ist, wobei sich die Stange in Längsrichtung über die gesamte Aufnahme erstreckt.

6. Dämpfungsvorrichtung gemäß einem der Ansprüche 1 bis 5, **dadurch gekennzeichnet, dass** sich ein erster Zylinder (10) ausgehend von einem ersten Querende des Gehäuses (4) erstreckt, während sich der andere Zylinder (10') ausgehend von dem Querende des Gehäuses (4) erstreckt, das dem ersten Ende gegenüber liegt.

7. Fahrzeug, insbesondere Eisenbahnfahrzeug, mit einem Gehäuse, das auf zwei Tragorganen (6, 8), insbesondere zwei Drehgestellten, ruht, welche in Längsrichtung mit Abstand voneinander angeordnet sind, **dadurch gekennzeichnet, dass** es mit einer Dämpfungsvorrichtung gemäß irgendeinem der vorherigen Ansprüche ausgestattet ist.

## Claims

1. Damping device intended to be mounted onto a vehicle (12), notably a railway vehicle, comprising a body (4) resting on first (6) and second (8) support elements, notably bogies, arranged longitudinally apart from each other, the body being capable of being displaced relative to the support elements (6, 8) according to two types of movement, that is transversely or pivotally about a point (46) substantially situated on a median longitudinal axis of the vehicle (2) and between the said support elements, **characterised in that** the said device comprises :
- first (10) and second (10') symmetrical actuators extending respectively between each support element (8, 6) and the body (4), each actuator (10, 10') defining first (24, 24') and second (26, 26') chambers filled with hydraulic fluid (16, 16') which may be respectively compressed and expanded during variations in the transverse distance between the body (4) and the support element in question (6, 8),
- first (28) and second (28') hydraulic lines which put into fluid communication firstly the first chambers (24, 24') of the first (10) and second (10') actuators, and secondly the second chambers (26, 26') of the first (10) and second (10') actuators, the said first (28) and second (28') lines respectively comprising first (29) and second (29') intermediate points from which extend first (30) and second (30') branch lines opening, opposite the intermediate points, into first (32) and second (32') accumulators containing a pressurised gas,
- first to fourth means (34, 36, 40, 42) for controlling the flow of hydraulic fluid, arranged between each chamber (24, 24', 26, 26') and one of the intermediate points (29, 29'), to ensure a controlled supply of fluid flow from the said chambers to the intermediate points,
- fifth and sixth means (38, 44) for controlling the flow of hydraulic fluid, arranged between each intermediate point (29, 29') and the corresponding accumulator (32, 32') to ensure a controlled supply of fluid flow from the intermediate points to the accumulators,
- the chambers (24, 24', 26, 26') put in mutual communication by the two lines (28, 28') being respectively compressed and expanded during a first type of movement between the support elements (6,8) and the body (4) in such a way that substantially all of the fluid displaced from each compressed chamber (24, 26') enters the expanded chamber (24, 26') with which it communicates, without any variation at all in the volume of fluid in the accumulators (32, 32'), and
- the chambers (24, 24') communicating via one (28) of the lines both being compressed during a second type of movement between the support elements (6, 8) and the body (4), so as to direct the fluid displaced from these two compressed chambers (24, 24') to one of the accumulators (32) and to cause the pressure of the gas contained therein to rise, while the chambers (26, 26') communicating via the other line (28') are both expanded, so as to direct towards these two expanded chambers (26, 26') part of the fluid in the other accumulator (32') and to cause the pressure of the gas contained therein to drop.

2. Damping device according to claim 1, **characterised in that** the first to fourth means (34, 36, 40, 42) for controlling fluid flow are intended to ensure a free flow of fluid from the intermediate points (29, 29') to the said chambers (24, 24', 26, 26').

3. Damping device according to claim 1 or 2, **characterised in that** the fifth and sixth means (38, 44) for controlling fluid flow are intended to ensure a free flow of fluid from the accumulators (32, 32') to the intermediate points (29, 29').

4. Damping device according to one of claims 2 and 3, **characterised in that** the said means (34, 36, 38, 40, 42, 44) for controlling fluid flow comprise a check valve (34B, 36B, 38B, 40B, 42B, 44B) fitted in parallel with a valve (34A, 36A, 38A, 40A, 42A, 44A).

5. Damping device according to one of claims 1 to 4, **characterised in that** each of the said actuators (10, 10') comprises a housing (14, 14') integral with the body (4) or with one of the support elements (6, 8), a housing in which a piston (18, 18') is intended to be displaced, the rod (20, 20') of which is integral with one of the support elements or the body, the said rod extending longitudinally over the entire housing.

6. Damping device according to claims 1 to 5, **characterised in that** a first actuator (10) extends from a first transverse end of the body (4) while the other actuator (10') extends from the transverse end of the body (4), opposite the said first end.

7. Vehicle, notably a railway vehicle, comprising a body resting on two support elements (6, 8), notably two bogies, arranged longitudinally apart from each other, **characterised in that** it is fitted with a damping device according to any of the preceding claims.
